# FASCICULE DE BREVET EUROPEEN

(11) **EP 2 428 011 B1**
(45) Date de publication et mention de la délivrance du brevet: **27.03.2013**
(21) Numéro de dépôt: 10715889.1
(22) Date de dépôt: 04.05.2010
(51) Int. Cl.: H04L 27/156, H04L 27/233, G06K 19/07

(54) **DÉMODULATEUR ET SYSTÈME DE TRANSMISSION D'INFORMATIONS MODULÉES, NOTAMMENT POUR ÉTIQUETTE D'IDENTIFICATION RADIOFRÉQUENCE**
DEMODULATOR UND SYSTEM ZUM ÜBERTRAGEN VON MODULIERTEN INFORMATIONEN INSBESONDERE FÜR HOCHFREQUENZIDENTIFIKATIONSETIKETTEN
DEMODULATOR AND SYSTEM FOR TRANSMITTING MODULATED INFORMATION, IN PARTICULAR FOR RADIOFREQUENCY IDENTIFICATION TAGS

(30) Priorité: 07.05.2009 FR 0902226
(43) Date de publication de la demande: 14.03.2012
(73) Titulaire: Commissariat à l'Énergie Atomique et aux Énergies Alternatives, 75015 Paris (FR)
(72) Inventeur: LACHARTRE, David, F-38330 Montbonnot (FR)
(74) Mandataire: Guérin, Michel
(86) Numéro de dépôt international: PCT/EP2010/056004
(87) Numéro de publication internationale: WO 2010/128030

(56) Documents cités:
- US-A- 5 990 733
- US-A1- 2009 045 871

## Description

L'invention concerne les communications sans fil et notamment les systèmes de communication en champ proche de type RFID (de l'anglais "Radio Frequency IDentification).

Les systèmes RFID permettent une transmission de données à très courte distance (de quelques centimètres à quelques mètres, ou exceptionnellement plus) entre un lecteur et une étiquette (en anglais "tag") de petite dimension. Le lecteur émet un signal à une fréquence radio qui transporte de l'énergie et de l'information (par exemple une interrogation) à destination de l'étiquette. L'étiquette est activée par l'énergie reçue et elle transmet vers le lecteur une information en réponse à l'information ou interrogation reçue. L'information peut être une simple identification numérique de l'étiquette donc, indirectement, de l'objet sur lequel l'étiquette est apposée. L'étiquette comprend une antenne radio qui permet de recevoir le signal à la fréquence émise par le lecteur et qui permet de renvoyer vers le lecteur un signal radio modulé par l'information à transmettre en retour. La modulation est faite dans l'étiquette qui peut comprendre à cet effet une puce de circuit intégré. Les étiquettes sont parfois pourvues d'une batterie pour assurer des fonctions auxiliaires, mais le plus souvent, lorsque leur fonction est principalement une fonction d'identification, elles sont entièrement alimentées par l'énergie radiofréquence reçue du lecteur.

La modulation effectuée par le lecteur est le plus souvent une modulation d'amplitude d'une fréquence porteuse, mais on cherche maintenant aussi à faire une modulation de fréquence ou de phase, permettant des débits d'information plus importants. La modulation effectuée par l'étiquette peut être une modulation de charge, c'est-à-dire une modulation de l'impédance de l'antenne, cette modulation réagissant sur l'impédance de l'antenne d'émission/réception du lecteur. On s'intéresse ici principalement à la modulation faite par le lecteur et à la démodulation faite par l'étiquette.

Lorsque la modulation par le lecteur est une modulation de fréquence ou de phase d'un signal à une fréquence porteuse centrale Fₒ, il faut pouvoir démoduler l'information dans l'étiquette et pour cela il faut disposer d'un signal à la même fréquence centrale Fₒ dans l'étiquette. Dans les systèmes de communication radio usuels fonctionnant en modulation de fréquence ou de phase, le récepteur dispose dans le cas général d'un générateur de fréquence local calé sur la fréquence centrale du signal radiofréquence qu'on veut démoduler. Le générateur local permet de réaliser la démodulation par transposition de fréquence vers une fréquence intermédiaire ou vers la bande de base. Les démodulateurs peuvent aussi utiliser une boucle à verrouillage de phase recevant le signal d'un oscillateur local contrôlé en tension (VCO) et calant la fréquence de ce signal sur la fréquence reçue. Avec des modulations de type très particulier on peut parfois se dispenser d'un oscillateur local, mais ce n'est pas possible dans le cas général.

Or, dans une étiquette RFID on n'a pas beaucoup de place pour loger ce générateur de fréquence ou cet oscillateur local et on ne dispose pas de beaucoup d'énergie pour le faire fonctionner. Un oscillateur local à fréquence contrôlée ou un générateur de fréquence autonome placés sur une puce de circuit intégré nécessitent en général des composants externes à la puce et on ne souhaite pas avoir de tels composants externes dans l'étiquette, pour des raisons d'encombrement.

Un but de l'invention est donc de proposer un système de transmission d'information et un circuit électronique de démodulation correspondant, particulièrement adapté à la communication entre un lecteur et une étiquette RFID. Le système peut émettre en modulation de fréquence ou de phase, sans nécessité d'un générateur de fréquence local dans le démodulateur, et sans composants externes qui viendraient se rajouter à une puce de circuit intégré unique présente dans l'étiquette.

Dans le système de transmission selon l'invention, on prévoit tout d'abord que la modulation modifie la fréquence ou la phase de la porteuse pendant des durées qui sont variables mais qui restent en relation avec la période du signal radiofréquence reçu. L'information est constituée par une succession de "symboles" adjacents représentés chacun par une fréquence ou une phase spécifiques et la détection des symboles se fait en mesurant une durée qui est en relation avec cette fréquence ou cette phase ; chaque symbole possible dure par exemple Nₛ périodes, Nₛ étant un nombre entier fixe qui est le même pour tous les symboles, mais la fréquence (en modulation de fréquence) ou la phase (en modulation de phase) varient selon le symbole. La démodulation consiste à déterminer la durée d'un groupe de Nₛ périodes, pour en déduire la fréquence ou la phase de la modulation donc la valeur du symbole correspondant à ce groupe de Nₛ périodes.

En modulation de fréquence, la durée du symbole sera de préférence exactement égale à Nₛ périodes du signal modulé F. En modulation de phase, la durée du symbole sera de préférence aussi égale à Nₛ périodes de la fréquence porteuse Fₒ modulée en phase, cette durée dépendant de la phase, de sorte que la durée globale du symbole variera selon la modulation. Dans une variante possible applicable à la condition que l'indice de modulation de fréquence (Fₘᵢₙ -Fₘₐₓ)/Fₒ autour de la fréquence centrale Fₒ soit suffisamment faible, la durée du symbole peut être constante mais égale à ou très proche de Nₛ périodes du signal à la fréquence centrale Fₒ, et la démodulation consistera là encore à observer la durée de Nₛ périodes du signal modulé.

Ce type de modulation peut être démodulé par un démodulateur selon l'invention qui ne nécessite pas d'horloge locale à la fréquence centrale Fₒ. Le démodulateur comprend une ligne à retard apte à recevoir un signal d'entrée à une fréquence d'entrée modulé en phase ou en fréquence par des symboles de durée égale à une période du signal d'entrée ou très proche de cette période, la ligne à retard ayant N_{d} sorties produisant N_{d} signaux à la fréquence du signal d'entrée mais avec N_{d} retards différents, N_{d} étant un nombre entier supérieur ou égal à 1, le démodulateur comprenant en outre un registre de N_{d} bascules recevant chacune d'une part une sortie respective de la ligne à retard et d'autre part un signal d'horloge constitué par le signal d'entrée, les bascules étant agencées pour stocker l'état des sorties de la ligne à retard à la fin d'une période du signal d'entrée, le contenu du registre représentant une valeur d'un symbole de modulation du signal d'entrée.

La ligne à retard peut être une ligne à retards fixes. Cependant, on préfère qu'elle soit commandée par une boucle d'asservissement à constante de temps longue (devant la durée des symboles) de manière que les incréments de retard établis sur les différentes sorties de la ligne restent stables d'un symbole au suivant mais s'ajustent en moyenne à long terme sur une valeur liée à la fréquence moyenne du signal d'entrée. On expliquera plus en détail cet asservissement dans la suite. La boucle d'asservissement comprend alors de préférence un comparateur de phase recevant d'une part le signal d'entrée à la fréquence d'entrée et d'autre part une des sorties de la ligne à retard, et un intégrateur à constante de temps très supérieure à la durée des symboles, la sortie de l'intégrateur contrôlant la durée des incréments de retards établis par la ligne pour les asservir en fonction de la valeur moyenne de la fréquence d'entrée.

Le démodulateur comprend de préférence, en amont de la ligne à retard, un diviseur de fréquence par un nombre entier Nₛ ; ce diviseur est apte à recevoir un signal à une fréquence radio modulé en phase ou en fréquence et à fournir à l'entrée de la ligne à retard le signal d'entrée à la fréquence d'entrée modulée Nₛ fois plus petite que la fréquence radio.

Le démodulateur selon l'invention est utilisable dans un système de transmission comprenant un lecteur et une étiquette, dans lequel le lecteur émet en modulation de fréquence ou de phase et dans lequel les symboles sont émis soit de manière synchrone (c'est-à-dire avec une durée représentant un nombre fixe de périodes du signal radio modulé) soit de manière asynchrone (avec des durées fixes, représentant de préférence un nombre fixe de périodes du signal à la fréquence centrale non modulée).

D'autres caractéristiques et avantages de l'invention apparaîtront à la lecture de la description détaillée qui suit et qui est faite en référence aux dessins annexés dans lesquels :
- la figure 1 représente un exemple de signal à fréquence radio, modulé en fréquence par des symboles de durées variables qui sont un multiple fixe de la durée de la période du signal modulé ;
- la figure 2 représente la structure d'un démodulateur selon l'invention;
- la figure 3 représente un chronogramme temporel expliquant le principe de la démodulation effectuée, dans le cas de la réception d'un signal modulé en fréquence par des symboles de durée multiple de la période de ce signal ;
- la figure 4 représente un chronogramme temporel expliquant le principe de la démodulation dans le cas de la réception d'un signal modulé en phase ;
- la figure 5 représente un chronogramme temporel expliquant le principe de la démodulation dans le cas de la réception d'un signal modulé en fréquence par des symboles successifs de durée fixe ;
- la figure 6 représente un exemple de diviseur par Nₛ ;
- la figure 7 représente un exemple de ligne à retard logique ;
- la figure 8 représente un exemple de comparateur de phase ;
- la figure 9 représente un exemple de pompe de charge ;
- la figure 10 représente une variante de réalisation du démodulateur, avec une ligne à retard auxiliaire en amont de la ligne à retard ;
- la figure 11 représente un démodulateur selon l'invention dans le cas particulier où N_{d} =1.

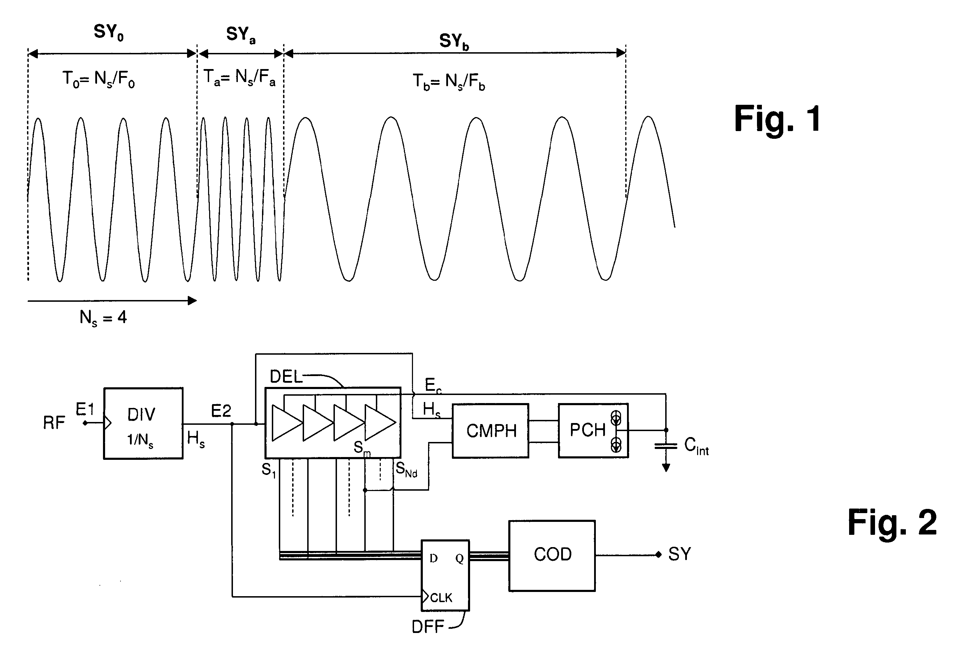

Sur la figure 1 on a représenté un signal radiofréquence composé d'une fréquence centrale radio modulée en fréquence par des symboles successifs de valeurs différentes, désignés respectivement par SYₒ, SYₐ, SY_{b}. La valeur d'un symbole est définie par une fréquence F respective (F=Fₒ, Fₐ, F_{b} ...) affectée à ce symbole. Sur la figure 1, on a représenté la fréquence de base non modulée, ainsi qu'une fréquence modulée Fₐ plus élevée et une fréquence modulée F_{b} moins élevée.

La durée de modulation, pendant laquelle chaque signal est émis, est liée à la période du signal radiofréquence.

Dans le cas le plus simple, qui est représenté sur la figure 1, la durée d'un symbole est égale à un nombre fixe de périodes du signal, de préférence un nombre entier Nₛ. La valeur du symbole est donc représentée non seulement par la valeur de la fréquence du signal émis mais aussi par une durée respective du symbole, cette durée étant T=Nₛ/F, c'est-à-dire Tₒ=Nₛ/Fₒ, Tₐ= Nₛ/Fₐ, T_{b}=Nₛ/F_{b}, etc. Dans l'exemple de la figure 1, Nₛ= 4 et les variations de fréquence ont été volontairement exagérées pour mieux faire comprendre les principes.

Dans ce cas simple, la durée du symbole est exactement égale à Nₛ périodes et les Nₛ périodes ont des durées toutes identiques ; la démodulation consistera à mesurer au moyen d'une ligne à retards la durée des symboles qui est exactement la durée de Nₛ périodes identiques. On verra plus loin que l'invention est applicable aussi
- dans le cas d'une modulation de phase où la durée du symbole est égale à Nₛ périodes du signal modulé, cette durée dépendant de la phase,
- dans le cas d'une modulation asynchrone où les durées des symboles sont toutes identiques à une valeur commune Tₒ qui est de préférence égale à Nₛ périodes de la fréquence moyenne Fₒ du signal radio.

Dans tous les cas, la modulation est faite de sorte que la durée des symboles représente un nombre entier Nₛ de périodes du signal radiofréquence, que ce soit exactement Nₛ périodes du signal modulé (Nₛ périodes identiques de durée 1/F ou Nₛ périodes pas forcément identiques mais dont la somme des durées dépend de la phase), ou encore Nₛ périodes de la fréquence moyenne Fₒ. Et dans tous les cas, on mesure la durée de Nₛ périodes du signal modulé.

La figure 2 représente une réalisation de démodulateur selon l'invention pour démoduler un signal modulé de l'une de ces différentes manières. Il comporte une entrée E1 recevant le signal radiofréquence RF à démoduler, issu d'une antenne de l'étiquette (non représentée). L'entrée E1 est reliée à l'entrée d'un diviseur de fréquence DIV (en pratique un compteur) qui divise la fréquence F du signal reçu par le nombre Nₛ et qui produit sur sa sortie un signal alternatif Hₛ, dit signal d'entrée, de période égale à Nₛ/F. Le compteur-diviseur est facultatif : sa présence dépend de la modulation attendue ; si la modulation est faite de sorte que la durée des symboles représente Nₛ périodes, Nₛ>1, du signal radiofréquence (exactement ou de manière approchée comme expliqué ci-dessus), un diviseur par Nₛ est nécessaire ; mais Nₛ peut à la limite être égal à 1, la modulation étant faite à chaque nouvelle période du signal radiofréquence, et dans ce cas il n'y a pas besoin de diviseur.

Le coeur du démodulateur selon l'invention est donc situé après le diviseur. L'entrée du coeur du démodulateur est une entrée E2 reliée à la sortie du diviseur, et cette entrée reçoit un signal Hₛ dont la fréquence est la fréquence F divisée par Nₛ.

L'entrée E2 est l'entrée d'une ligne à retards DEL ayant un nombre N_{d} de sorties S₁ à S_{Nd} , chaque sortie Sᵢ fournissant un signal de même période que le signal d'entrée Hₛ mais avec un retard respectif Dᵢ où i est un indice représentant le rang de la sortie de la ligne. Les retards Dᵢ des N_{d} sorties sont échelonnés régulièrement à des intervalles ΔT entre une valeur minimale et une valeur maximale.

La ligne à retard pourrait être une ligne produisant des retards fixes échelonnés d'une valeur figée ΔT. Cependant, il est préférable que la valeur du retard élémentaire ΔT soit asservie sur la fréquence moyenne Fₒ du signal reçu par le démodulateur. En effet, la valeur ΔT va être utilisée pour mesurer des écarts entre des durées de périodes de signal proches de la fréquence moyenne reçue et il est souhaitable qu'il y ait un lien direct entre la fréquence moyenne reçue et la valeur du retard qui sert à la mesure des écarts.

C'est pourquoi la figure 2 représente un démodulateur qui est pourvu d'un tel asservissement. L'asservissement est produit par une boucle à verrouillage de phase qui comprend un comparateur de phase CMPH et un intégrateur à constante de temps longue devant la durée des symboles à démoduler (de préférence, la constante de temps est d'au moins plusieurs centaines de fois la durée d'un symbole).

Le comparateur de phase reçoit d'une part le signal d'entrée à la fréquence d'entrée Hₛ et d'autre part un signal issu de l'une des sorties (sortie Sₘ) de la ligne à retard. La sortie Sₘ fournit le signal Hₛ avec un retard de référence Dₘ tel que pour la fréquence de modulation moyenne Fₒ/Nₛ, les fronts de montée du signal sur la sortie Sₘ soient en phase (cela pourrait être en opposition de phase, selon la constitution du comparateur de phase) avec les fronts de montée du signal non retardé Hₛ.

La boucle à verrouillage de phase agit sur la ligne à retard en ajustant le retard élémentaire ΔT dans un sens tendant à maintenir la sortie Sₘ en phase avec l'entrée E2 (donc un déphasage nul entre les entrées du comparateur de phase). La constante de temps élevée de la boucle permet que cette mise en phase se fasse pour une fréquence moyenne Fₒ du signal radio. De ce fait, la durée de retard ΔT peut être considérée comme fixe d'un symbole au suivant.

L'intégrateur placé en sortie du comparateur de phase est constitué par exemple à l'aide d'une pompe de charge PCH et d'un intégrateur (capacité Cᵢₙₜ). La tension intégrée aux bornes de la capacité Cᵢₙₜ est appliquée à l'entrée de commande E_{c} de la ligne à retard ; la tension sur cette entrée agit sur la valeur du retard élémentaire ΔT donc sur tous les retards établis par la ligne. Du fait de l'intégration de l'information de déphasage fournie par le comparateur de phase CMPH, la tension aux bornes de la capacité d'intégration se stabilise à une valeur telle que le déphasage moyen entre le signal Hₛ et le signal de sortie sur Sₘ soit nul (ou constant).

Les N_{d} sorties de la ligne à retard sont appliquées aux entrées d'un registre DFF de multiples bascules D. Chaque bascule D reçoit sur son entrée D une sortie respective parmi les N_{d} sorties, et reçoit sur une entrée d'horloge CLK le signal d'entrée Hₛ à la fréquence F/Nₛ. Sur le front montant (par exemple) du signal Hₛ, les bascules prennent chacune l'état imposé sur leur entrée D respective. Cet état dépend de l'instant d'arrivée d'un deuxième front montant de Hₛ après un premier front montant qui a été différemment retardé sur chacune des sorties. Le premier front montant est celui qui définit un début de symbole. Le deuxième est celui qui définit la fin de symbole (et le début d'un nouveau symbole). A la fin du symbole, l'ensemble de N_{d} sorties du registre de bascules définit, selon un code de type thermométrique, une valeur qui représente le symbole qui vient de se terminer.

Un circuit de codage COD placé en sortie du registre de bascules permet de fournir la valeur du symbole sous une autre forme que thermométrique, par exemple selon un code binaire. Les symboles successifs arrivent sur la sortie SY au fur et à mesure de l'arrivée des fronts montants de Hₛ.

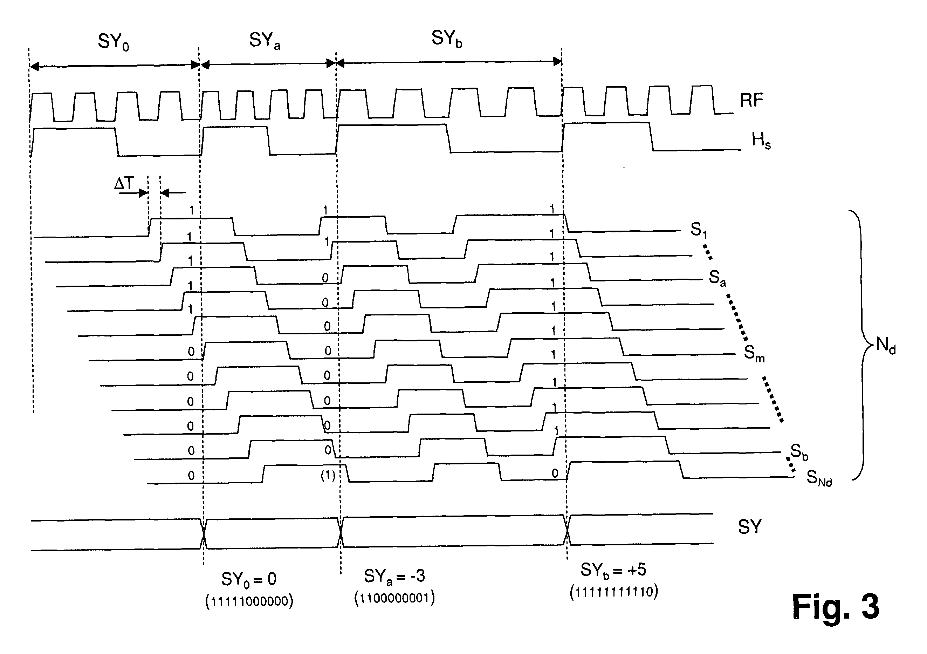

La figure 3 représente un chronogramme expliquant la démodulation dans un exemple où la modulation du signal reçu est une modulation de fréquence et où chaque symbole a une durée exactement égale à Nₛ périodes (sur la figure 3, Nₛ = 4) du signal radio RF reçu à l'entrée E1 du démodulateur. On a représenté trois symboles successifs SYₒ, SYₐ, SY_{b} correspondant respectivement à trois valeurs de fréquence différentes Fₒ, Fₐ, F_{b} et donc à trois durées différentes. On considère ici que la fréquence Fₒ est la fréquence centrale autour de laquelle s'effectue la modulation, et que cette fréquence Fₒ est la fréquence moyenne du signal modulé ; la fréquence Fₐ est supérieure à Fo et la fréquence F_{b} est inférieure à Fₒ. Un symbole SYₒ est affecté dans cet exemple à la fréquence moyenne Fₒ mais ce n'est pas obligatoire.

La première ligne de la figure 3 représente le signal radiofréquence RF reçu à l'entrée E1 du démodulateur et ayant une fréquence variable F. La deuxième ligne représente le signal Hₛ en sortie du compteur-diviseur DIV, donc à l'entrée E2 de ce qu'on a appelé précédemment le coeur du démodulateur. Le signal Hₛ a une fréquence qui est la fréquence F/Nₛ. Les N_{d} lignes suivantes de la figure 3, référencées S₁ à S_{Nd}, représentent N_{d} signaux à fréquence F/Nₛ retardés par la ligne à retard DEL et présents sur les N_{d} sorties S₁ à S_{Nd} de cette ligne à retard.

Plus le nombre de sorties N_{d} est élevé (et plus l'incrément de retard ΔT entre deux sorties successives est faible) plus le démodulateur est précis.

L'une des sorties, Sₘ, de la ligne à retard joue un rôle particulier puisqu'elle sert de référence à la boucle à verrouillage de phase. La sortie Sₘ est de préférence celle qui établit un retard d'une période entière du signal Hₛ lorsque la fréquence d'entrée est Fₒ. C'est la solution la plus simple pour caler la boucle à verrouillage de phase sur un retard élémentaire qui est défini par rapport à la fréquence moyenne du signal modulé en fréquence. L'incrément élémentaire ΔT de retard entre les sorties successives de la ligne à retard peut être considéré comme fixe du fait de la boucle à verrouillage de phase à constante de temps longue.

On voit sur la figure 3 que le signal retardé de la sortie Sₘ a des fronts de montée qui coïncident avec les fronts de montée du signal Hₛ lorsque ce dernier est à la fréquence Fₒ/Nₛ, donc pendant l'émission du symbole SYₒ. On pourrait aussi envisager que les fronts de montée du signal de la sortie Sₘ coïncident avec les fronts de descente du signal Hₛ en modifiant en conséquence la constitution du comparateur de phase CMPH.

A la fin du symbole SYₒ, au front de remontée du signal Hₛ, les états logiques des sorties S₁ à Sₘ₋₁ qui précèdent la sortie Sₘ sont dans un premier état logique (ici : niveau haut 1), alors que les sorties Sₘ à S_{Nd} sont dans un deuxième état logique (ici : niveau bas 0). L'état de l'ensemble des sorties prises dans l'ordres est : 11111000000.

Le symbole suivant SYₐ correspond à une fréquence plus élevée. A la fin du symbole SYₐ, lors du front de remontée du signal Hₛ, l'état des premières sorties de la ligne à retard, avant une sortie Sₐ est au niveau 1, et l'état des dernières sorties à partir de Sₐ (à l'exception de la sortie S_{Nd}) est au niveau 0. L'état de l'ensemble des sorties prises dans l'ordre est dans cet exemple 110000000(1). Le dernier 1 ne joue pas de rôle.

Enfin, le symbole SY_{b} correspond à une fréquence moins élevée que Fₒ et l'état des sorties de la ligne à retard au moment du front de remontée du signal Hₛ à la fin du symbole SY_{b} est 111111111110, c'est-à-dire 1 avant une sortie S_{b} et 0 de la sortie S_{b} jusqu'à la sortie S_{Nd}.

La position de la transition de l'état 1 vers l'état 0 dans le sens des retards croissants représente donc directement l'écart entre les longueurs des symboles, le code 11111000000 représentant le symbole SYₒ c'est-à-dire la fréquence moyenne Fₒ, le code 11000000xx représentant un symbole SYₐ (fréquence plus basse) et le code 11111111110 représentant un symbole SY_{b} (fréquence plus élevée).

L'état global des sorties définit donc les symboles, selon un code thermométrique c'est-à-dire un code où la valeur est définie par la position d'une transition d'une série d'états 1 vers une série d'états 0.

Le registre DFF de N_{d} bascules D mémorise ce code au moment de la fin d'un symbole (définie par le front de remontée du signal Hₛ), et le codeur COD convertit le code en binaire pur (par exemple) pour fournir sur la sortie SY une valeur de symbole qui vient d'être démodulé.

Dans l'exemple qui a été représenté, on considère que les valeurs des symboles sont incrémentées ou décrémentées d'une unité chaque fois que la durée du symbole est incrémentée ou décrémentée d'une valeur ΔT, le symbole SYₒ ayant une valeur 0, le symbole SYₐ a une valeur -3 et le symbole SY_{b} a une valeur +5. On comprendra que si la modulation est faite de telle sorte qu'un incrément de valeur de symbole dans la succession des symboles possibles correspond à un incrément de retard 2ΔT, le codeur COD doit en tenir compte pour déterminer la valeur du symbole à partir du code thermométrique.

Pour que le démodulateur fonctionne dans les meilleures conditions, il est souhaitable que le diviseur DIV (lorsqu'il est présent) soit bien synchronisé sur le début d'un symbole. Il comporte alors une entrée de synchronisation (non représentée). La synchronisation peut être recherchée lors de l'émission répétée d'un code d'initialisation avant le début d'une véritable transmission d'informations. On reviendra plus loin sur ce point.

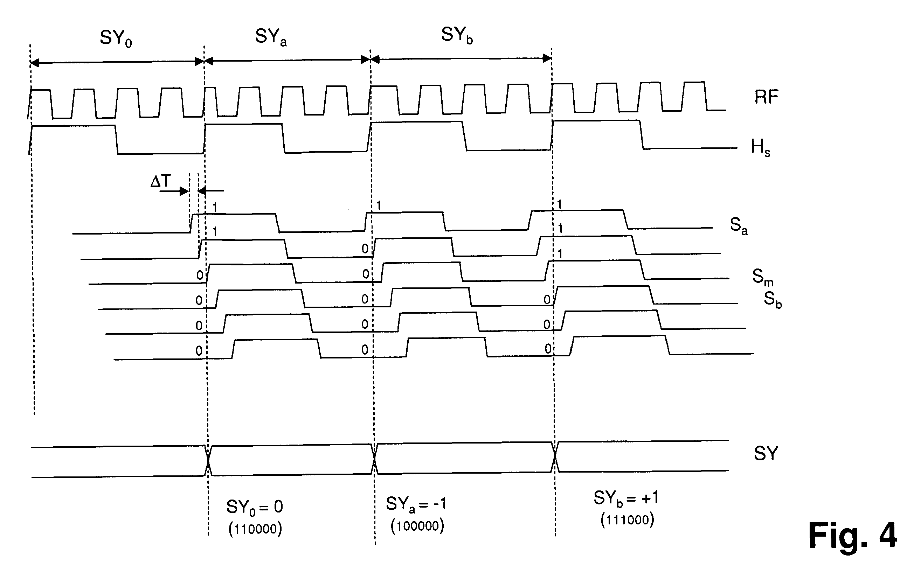

La figure 4 représente un exemple de fonctionnement du démodulateur selon l'invention dans le cas où le signal radiofréquence est modulé en phase. On considère encore que la durée d'un symbole est de Nₛ périodes du signal radiofréquence. La durée globale des Nₛ périodes est telle que la fin du symbole soit déphasée d'une phase déterminée par rapport à la fréquence d'horloge non modulée en phase. Par exemple, on peut considérer que la première période a une durée T = (1+Φ/2π) /Fₒ, où Fₒ est la fréquence porteuse du signal radio et Φ est la phase qui sert à moduler ce signal. Φ est égal à zéro (par exemple) pour le symbole SYₒ et égal à Φₐ ou Φ_{b} pour les symboles SYₐ et SY_{b}. Les périodes suivantes ont une durée 1/Fₒ. Dans l'exemple représenté, Φₐ est négatif (conduisant à une première période du symbole plus courte que les autres) et Φ_{b} est positif (conduisant à une première période plus longue). C'est cet exemple de modulation de phase qui est représenté sur la figure 4.

Le signal Hₛ a des fronts de montée synchrones des fronts de montée du signal radio en début de symbole et en fin de symbole.

La durée qui sépare le front de montée de Hₛ en début de symbole et le front de montée en fin de symbole est là encore mesurée par l'état des N_{d} sorties retardées de la ligne à retard au moment du front de montée qui définit la fin du symbole. La sortie Sₘ est celle qui fournit un signal retardé d'une période entière lorsque la phase de modulation Φ est nulle.

L'état des sorties du registre de bascules définit encore un code thermométrique qui représente la durée de la période du signal Hₛ donc la valeur du symbole puisque cette durée est directement liée à la phase.

On remarquera que la modulation de phase consiste à établir un déphasage par rapport à une référence temporelle absolue qui est définie par la porteuse non modulée ; comme le démodulateur mesure une durée de Nₛ périodes par rapport à la fin du symbole précédent, le code thermométrique obtenu en sortie représentera une variation de symbole par rapport au symbole précédent plutôt que le symbole de modulation proprement dit. Par conséquent, on obtiendra le véritable symbole qui a servi à moduler la phase en ajoutant la variation détectée à la valeur du symbole précédent. Un registre d'addition (non représenté) sera ajouté à cet effet en sortie du démodulateur. On adoptera alors, par sécurité, des mécanismes de correction d'erreur pour éviter qu'une erreur de démodulation sur un symbole ne se propage sur tous les symboles qui suivent.

La figure 2 et la figure 3 illustraient le cas d'une modulation de fréquence et d'une modulation de phase dans lesquelles la durée d'émission d'un symbole était exactement de Nₛ périodes entières du signal à la fréquence radio à l'instant du symbole, la durée de la première période prenant en compte la valeur de la phase dans le cas de la modulation de phase. Dans ces deux cas, il s'agit d'une modulation dite synchrone en ce sens que l'instant de début d'un symbole et de fin d'un symbole est calé par rapport à la fréquence radio. La durée des symboles était donc variable d'un symbole à l'autre.

Mais le démodulateur peut aussi fonctionner dans le cas où le signal reçu est modulé de manière asynchrone, avec une durée de symbole fixe. C'est particulièrement vrai dans le cas où le signal est modulé en phase mais cela peut être le cas aussi en modulation de fréquence à la condition cependant que le taux de modulation du signal à la fréquence radio soit relativement faible.

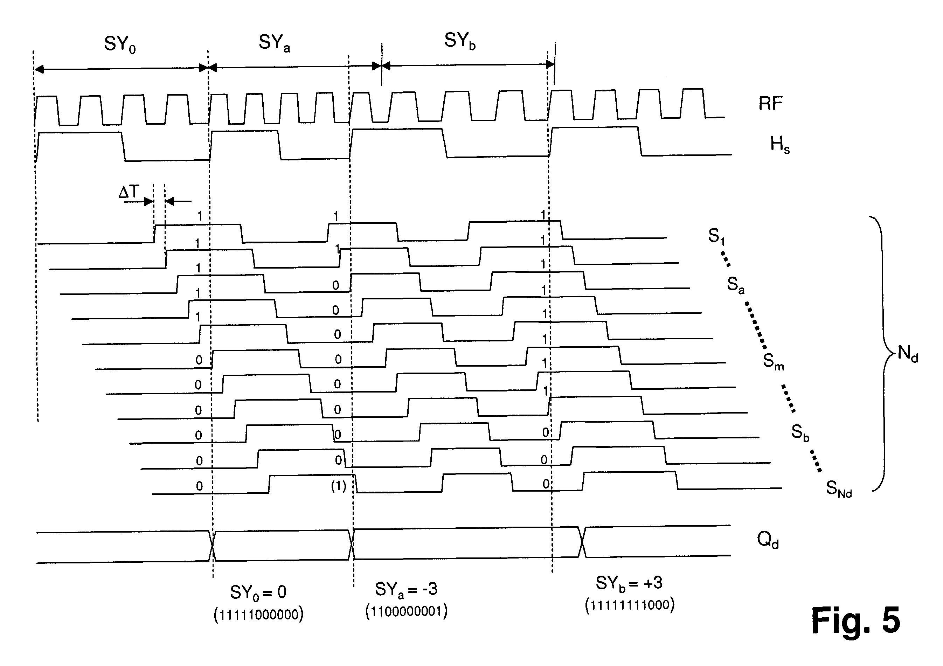

La figure 5 illustre la démodulation dans ce dernier cas. La durée d'un symbole est celle pendant laquelle la fréquence est modifiée et prend la valeur définie pour ce symbole. Mais la mesure de retard reste définie par la fréquence Hₛ, c'est-à-dire essentiellement par une durée liée à Nₛ/F et c'est bien cette durée qu'on cherche à mesurer pour remonter à la fréquence donc à la valeur du symbole.

C'est pourquoi, ce sont toujours les fronts de montée de Hₛ (=Nₛ/F) (ou toujours les fronts de descente) qui enregistrent dans les bascules l'état des sorties de la ligne à retard. Il y a donc, dans le cas de la modulation asynchrone par des symboles de durée constante un décalage temporel entre la fin du symbole et l'instant de basculement des bascules.

La durée des symboles est de préférence prise égale à Nₛ périodes à la fréquence moyenne Fₒ. Les symboles SYₒ ont donc une durée exactement égale à Nₛ/Fₒ, mais les symboles SYₐ et SY_{b}, qui ont la même durée, sont l'un un peu plus long que Nₛ/Fₐ et l'autre un plus court que Nₛ/F_{b}. Mais si les variations de fréquence sont faibles et régulièrement réparties, l'erreur d'instant de mesure qui en résulte (par rapport à l'instant de fin de symbole) peut être inférieure à la durée d'un retard élémentaire ΔT de la ligne à retard, et dans ce cas il n'y a pas d'erreur de détermination du symbole.

On notera que le risque d'erreur dans le cas d'une modulation asynchrone avec des symboles de durée constante est d'autant plus faible que Nₛ est plus grand (et, dans le cas d'une modulation de fréquence, que l'indice de modulation est plus faible).

Quel que soit le type de modulation, synchrone ou asynchrone, de fréquence ou de phase, le démodulateur fournit en sortie du registre de N_{d} bascules (dans le cas où N_{d} est supérieur à 1) un code thermométrique dans lequel la valeur du symbole démodulé est définie par l'emplacement de la transition d'une série continue d'état logiques 0 vers une série continue d'états logiques 1. Cette particularité permet, si on le souhaite, d'établir une détection d'erreurs de démodulation : si on détecte une absence de transition d'une série de 1 vers une série de 0, ou au contraire plusieurs transitions de ce type, le symbole démodulé sera considéré comme erroné et rejeté.

Les figures qui suivent ne sont données qu'à titre d'exemple illustratifs montrant comment on peut réaliser le diviseur de fréquence, la ligne à retards, le comparateur de phase et l'intégrateur du démodulateur de la figure 2.

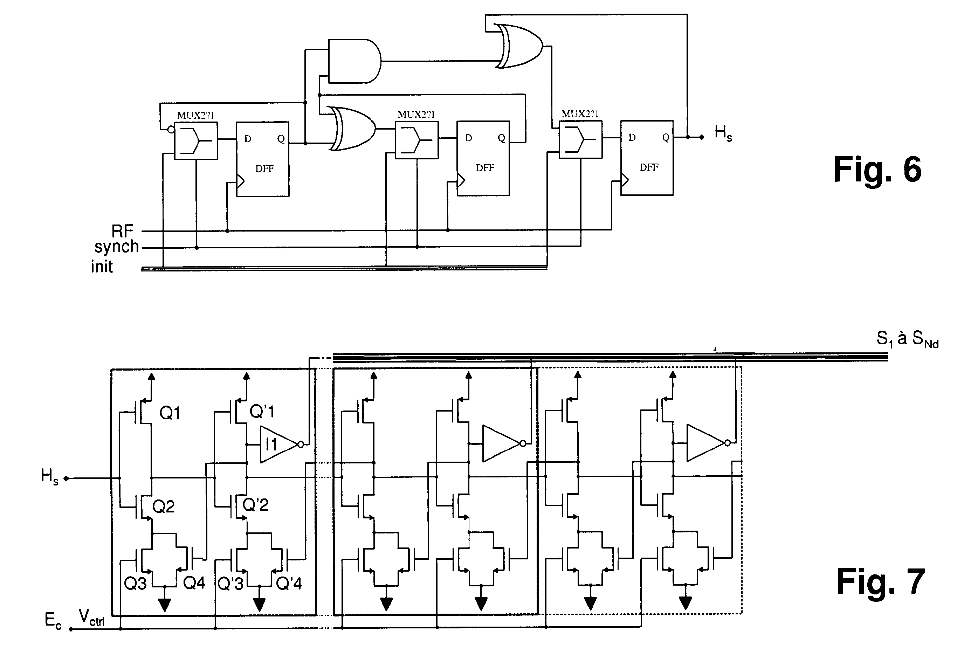

La figure 6 représente un exemple de diviseur de fréquence par Nₛ dans le cas où Nₛ = 8. Il s'agit seulement d'un exemple, bien des solutions connues existant pour réaliser un diviseur de fréquence.

Le diviseur est un compteur : il comporte trois bascules D qui forment un compteur à trois bits ; l'entrée d'horloge de ces trois bascules reçoit le signal à la fréquence radio RF issue par exemple de l'antenne d'une étiquette RFID. L'entrée D de chaque bascule reçoit la sortie d'un multiplexeur respectif MUX1, MUX2, MUX3. Les multiplexeurs servent pour assurer l'initialisation du compteur à une valeur déterminée (entre 0 et 7) pendant une phase de synchronisation, puis ils assurent les rebouclages nécessaires entre les sorties et les entrées de bascules. Ces rebouclages établissent les divisions de fréquence nécessaires ; ainsi, la première bascule divise la fréquence RF par deux parce que son entrée D provient de sa sortie ; la deuxième bascule divise la fréquence par quatre parce que son entrée reçoit sa sortie à travers une porte OU-Exclusif commandée par la première bascule ; et la troisième bascule divise la fréquence par huit parce que son entrée ne reçoit sa sortie qu'à travers une porte OU-Exclusif commandée par les deux autres bascules.

Une entrée de synchronisation et un bus d'initialisation sont prévus. L'entrée de synchronisation "synch" commande les multiplexeurs pour appliquer aux bascules, pendant la synchronisation, des états logiques correspondant à une valeur d'initialisation (de 0 à 7).

La synchronisation peut s'effectuer de plusieurs manières, et notamment par l'envoi d'un code de synchronisation en tête d'une trame de symboles, ou l'envoi d'un symbole modulé spécifique, ou une modulation d'amplitude d'une impulsion de synchronisation.

Dans le cas d'une synchronisation par un code en tête de trame, on prévoit que l'en-tête contient un code de longueur N_{c} (nombre de symboles N_{c}) répété au moins Nₛ fois.

Une petite machine à états, non représentée, va générer dans le démodulateur Nₛ fois une impulsion de synchronisation toutes les N_{c} périodes du signal à la fréquence RF. A chaque impulsion la valeur d'initialisation appliquée au compteur formé par les trois bascules est incrémentée d'une unité, jusqu'à avoir produit les Nₛ valeurs possibles d'initialisation. Le démodulateur produit N_{c} codes différents du fait que l'initialisation est à chaque fois différente. L'un de ces codes sera identique à un code d'initialisation attendu et la détection du code attendu va arrêter le processus de synchronisation du compteur, celui-ci continuant à effectuer la division par Nₛ à partir de l'état synchronisé détecté.

La synchronisation peut alternativement être effectuée avec un symbole spécifique non utilisé dans la transmission de donnée, plutôt qu'avec un code spécifique de N_{c} symboles. Le principe est le même que précédemment, avec une succession de Nₛ initialisations différentes jusqu'à ce que le démodulateur trouve le symbole spécifique.

Enfin, on peut envisager aussi que l'émetteur module en amplitude une impulsion de synchronisation, mais alors le démodulateur doit être pourvu de moyens de démodulation d'amplitude.

La figure 7 représente un exemple de constitution d'une ligne à retards logique utilisable dans le démodulateur selon l'invention. Elle possède une entrée E2 pour recevoir le signal Hₛ et N_{d} sorties S₁ à S_{Nd} fournissant un signal logique ayant les mêmes fronts de montée que le signal Hₛ mais retardé par rapport à ce signal. Une sortie intermédiaire (la sortie Sₘ mentionnée précédemment) fournit un signal retardé dont un front coïncide avec un front du signal Hₛ. Les autres sorties fournissent des signaux retardés décalés les uns par rapport aux autres d'incréments ΔT. La ligne comporte N_{d} étages identiques en cascade formés chacun d'une paire de cellules inverseuses ; chaque étage propage de son entrée vers sa sortie le signal qu'il reçoit de l'étage précédent en le retardant de ΔT.

Une cellule est formée d'un transistor PMOS Q1 et un transistor NMOS en série Q2, réunis par leur drain et ayant leurs grilles réunies, un transistor d'alimentation en courant NMOS Q3 en série avec la paire Q1, Q2, ce transistor ayant sa grille commandée par une tension continue V_{crtrl} présente sur l'entrée de commande E_{c} de la ligne à retard. Une autre paire de transistors Q'1, Q'2 est montée comme la paire Q1, Q2, avec un transistor d'alimentation Q'3 monté comme Q3. La paire Q1, Q2 agit comme un premier inverseur et la paire Q'1, Q'2 comme un deuxième inverseur et la sortie de ce deuxième inverseur est reliée à l'entrée de l'étage suivant de la ligne à retard. Un inverseur de sortie I1 a son entrée connectée aux drains réunis de Q'1 et Q'2 et sa sortie constitue une sortie respective de la ligne à retard parmi les N_{d} sorties.

L'incrément de retard ΔT entre deux sorties de la ligne est la somme du retard de basculement du premier inverseur (Q1, Q2) et du deuxième inverseur Q'1, Q'2.

Le réglage de l'incrément de retard ΔT est fait par variation de la tension de contrôle V_{ctrl} des transistors Q3 et Q'3 ; cette tension provient (cf. figure 2) de la boucle à verrouillage de phase (en pratique : de la capacité d'intégration Cᵢₙₜ), ce qui assure un réglage automatique de l'incrément de retard. Plus V_{ctrl} est élevée, plus le courant de décharge du noeud capacitif en sortie d'une paire de transistors telle que Q1, Q2 ou Q'1, Q'2 est élevé et plus la décharge du noeud capacitif constitué sur les drains de ces paires est rapide ; le niveau de basculement de la paire de transistors suivante (du même étage ou de l'étage suivant) est atteint plus rapidement et donc le retard produit par l'étage est plus faible. Inversement, plus V_{ctrl} diminue, plus la décharge est lente et plus le retard augmente.

On prévoit de préférence en parallèle avec chaque transistor d'alimentation (Q3, Q'3) un transistor de contre-réaction (Q4, Q'4) dont la grille est commandée par la paire de cellule suivante (du même étage s'il s'agit du transistor Q4 en parallèle avec Q3, ou de l'étage suivant s'il s'agit du transistor Q'4 en parallèle avec Q'3). Ce transistor décharge très rapidement le noeud de sortie d'une paire de cellules après que la cellule suivante a basculé, et ceci permet d'avoir des fronts de transition plus raides lorsque ce noeud de sortie passe à zéro.

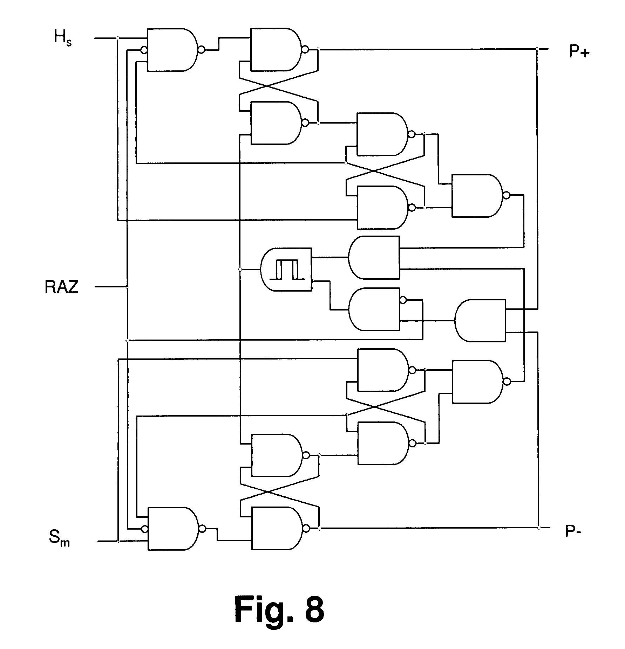

La figure 8 représente un exemple de comparateur de phase utilisable dans le démodulateur selon l'invention. C'est un comparateur composé d'un ensemble de portes logiques fonctionnant en logique asynchrone ; il reçoit sur ses entrées la sortie Sₘ de la ligne à retard et le signal Hₛ en sortie du diviseur de fréquence DIV en vue de comparer les phases de ces deux sorties.

La comparaison se fait sur les fronts montants des signaux d'entrée. Le comparateur a deux sorties P+ et P- et produit sur ces sorties des impulsions positives dont le début et la fin dépendent de la position relative des fronts de montée sur les deux entrées du comparateur. Par exemple, si le front de montée du signal Hₛ est en avance sur le front du signal de la sortie Sₘ, l'impulsion sur P+ démarrera plus tôt que l'impulsion sur P-.

Ce sont ces impulsions qui serviront à alimenter un intégrateur produisant sur une capacité Cᵢₙₜ une tension de contrôle V_{ctrl} à destination de la ligne à retards. L'intégrateur est constitué dans ce cas par une pompe de charge, chargeant et déchargeant la capacité Cᵢₙₜ par des impulsions de courant positives ou négatives qui augmentent ou diminuent la tension V_{ctrl} en fonction du déphasage constaté. Si les impulsions positives sont plus longues que les impulsions négatives, la capacité se charge, sinon elle se décharge. L'équilibre est atteint lorsque les signaux d'entrée sont en phase l'un avec l'autre, le comparateur de phase fournissant alors périodiquement une courte impulsion positive et une courte impulsion négative de durées égales, qui se compensent et maintiennent la tension aux bornes de la capacité à sa valeur d'équilibre.

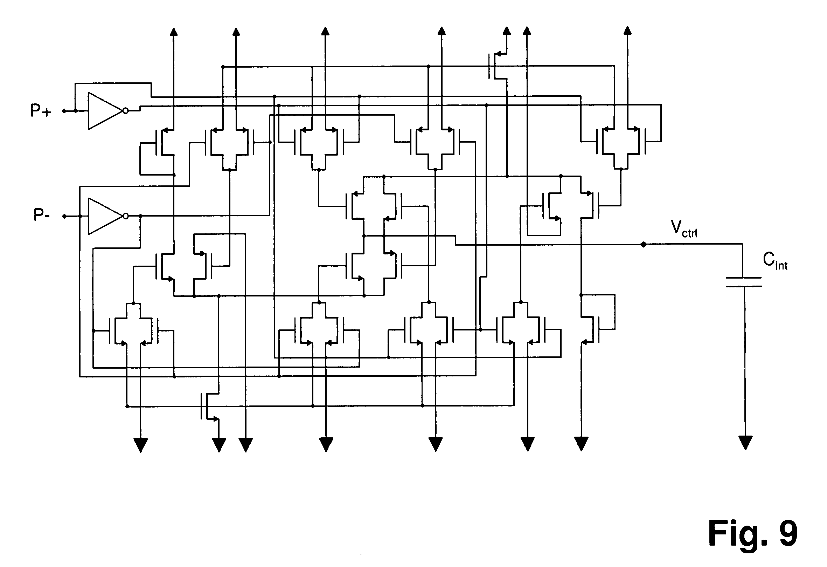

La figure 9 représente une réalisation possible de la pompe de charge, des schémas classiques de pompes de charge pouvant également être utilisés à la place de ce schéma.

Les impulsions P+ et P- issues du comparateur de phase sont appliquées aux deux entrées de la pompe de charge et la pompe de charge produit des courants positifs et négatifs fonction respectivement des largeurs des impulsions sur P+ et sur P-, l'un des courants chargeant la capacité d'intégration Cᵢₙₜ et l'autre déchargeant cette capacité.

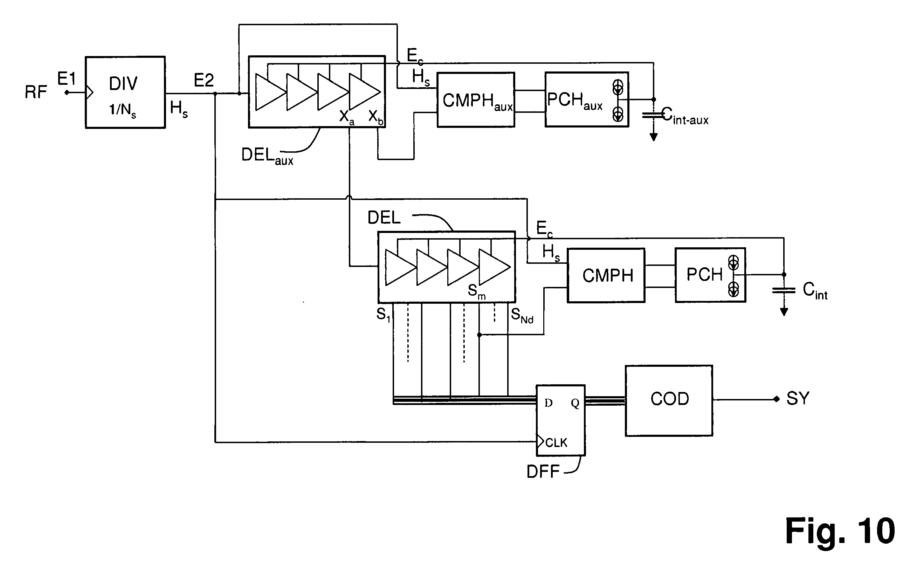

La figure 10 représente une variante de réalisation du démodulateur, utilisant une ligne à retard auxiliaire en amont de la ligne déjà décrite. Cette variante est utile pour réduire le nombre de sorties de la ligne à retard DEL dans certains cas et notamment dans le cas où le nombre Nₛ est plus élevé que 2 ou 4, ou encore lorsque le nombre de symboles possibles est élevé. En effet, par exemple dans le cas où Nₛ est important, il faut produire à la fois un retard moyen important sur la sortie Sₘ (retard d'une période entière du signal Hₛ donc Nₛ fois la durée d'une période du signal RF) et en même temps des incréments de retards ΔT de faible valeur entre les différentes sorties pour pouvoir distinguer les différentes durées de symboles. Dans ce cas, on préfère utiliser une ligne à retard auxiliaire DELₐᵤₓ fournissant un signal déjà retardé à la ligne à retards DEL. La ligne à retard auxiliaire établit donc un retard principal, et la ligne DEL établit à partir de ce retard principal les N_{d} incréments successifs ΔT nécessaires à la démodulation. Le retard principal est choisi en fonction de la durée minimale qu'on veut mesurer. Typiquement, si la modulation est une modulation de fréquence autour d'une fréquence Nₛ/Fₒ, engendrant des périodes de signal Hₛ allant de Nₛ/Fₘₐₓ à Nₛ/Fₘᵢₙ, on choisira un retard principal égal à Nₛ/Fₘₐₓ pour la ligne à retard DELₐᵤₓ.

La ligne à retard auxiliaire DELₐᵤₓ possède donc une sortie Xₐ qui fournit le signal Hₛ retardé du retard principal, et la ligne à retard DEL possède toujours N_{d} sorties qui établissent des retards qui sont incrémentés de ΔT par rapport à ce retard principal. La sortie Sₘ fournit de préférence, comme dans la réalisation de la figure 2, un signal dont les fronts de montée sont en phase avec ceux du signal Hₛ pour la fréquence moyenne de modulation Fo. La ligne DELₐᵤₓ est de préférence également asservie sur cette fréquence moyenne de modulation Fₒ, l'asservissement étant fait de la même manière que pour la ligne DEL ; à cet effet, la ligne DELₐᵤₓ possède de préférence une autre sortie retardée X_{b} dont les fronts de montée sont sensiblement synchrones des fronts de montée de Hₛ pour la fréquence moyenne Fₒ, et c'est cette sortie X_{b} qui sert à l'asservissement des retards de la ligne auxiliaire DELₐᵤₓ de la même manière que la sortie Sₘ sert à l'asservissement de la ligne DEL. La boucle d'asservissement de la ligne DELₐᵤₓ comprend donc un comparateur de phase CMPHₐᵤₓ recevant le signal Hₛ et la sortie X_{b}, une pompe de charge CHPₐᵤₓ recevant les sorties du comparateur de phase, et une capacité d'intégration Cᵢₙₜ₋ₐᵤₓ qui intègre la sortie de la pompe de charge avec une constante de temps très supérieure à la durée des symboles de modulation.

Avec le schéma de la figure 10, si on prend comme retard principal établi par la ligne DELₐᵤₓ une valeur de retard égale à Nₛ/Fₒ - N_{d}. ΔT/2, la ligne à retard DEL établira N_{d} retards successifs de valeur ΔT à partir de ce retard principal, de sorte que l'ensemble des retards établis par la ligne DEL va d'un retard Nₛ/Fₒ - N_{d.} ΔT/2 à un retard Nₛ/Fₒ+N_{d}.ΔT/2, permettant la mesure de symboles de durées correspondant à cet intervalle avec une résolution ΔT.

La ligne à retard DELₐᵤₓ n'a pas besoin d'avoir de nombreux étages comme la ligne DEL, mais ses étages établissent des retards plus importants que ΔT.

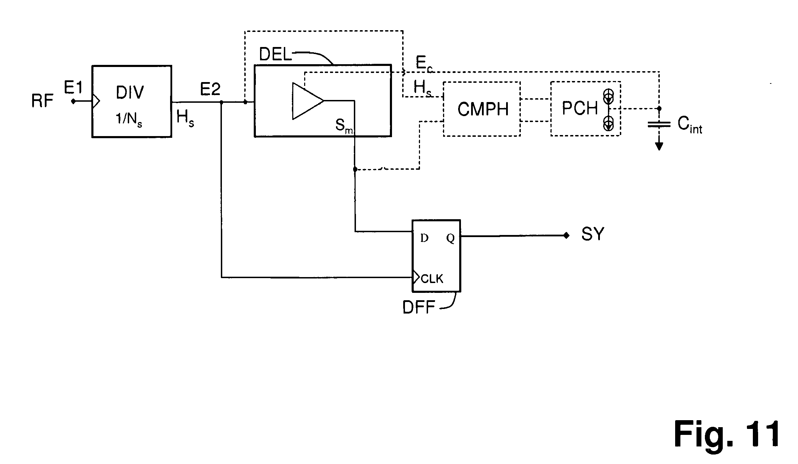

La figure 11 représente une réalisation dans laquelle N_{d} est égal à 1. Cette réalisation permet de démoduler une série de symboles n'ayant que deux états possibles mais elle a l'avantage d'une très grande simplicité et d'un très faible encombrement dans une puce de circuit intégré. Elle fonctionne comme les réalisations précédentes en modulation de fréquence ou en modulation de phase. En modulation de fréquence, les fréquences du signal radiofréquence RF correspondant aux deux symboles à démoduler sont respectivement F₁ et F₂ telles que Nₛ/F₁ = Tₒ+ΔT et Nₛ/F₂ = Tₒ-ΔT, la fréquence moyenne étant Fₒ=Nₛ/Tₒ. On notera qu'avec N_{d} = 1 on ne peut pas avoir de symbole représenté par la fréquence moyenne Fₒ. En modulation de phase, les symboles à démoduler correspondent aussi à des durées Tₒ+ΔT et Tₒ-ΔT, ces durées différentes résultant des sauts de phase du signal à la fréquence radio (fréquence Fₒ) au moment des transitions entre symboles. Pour un saut de phase de π/2 par exemple, ΔT est égal à Tₒ/4Nₛ (un quart de période du signal à la fréquence radio). On notera qu'un saut de phase de π n'est pas possible, si Nₛ=1.

Le démodulateur comporte un diviseur de fréquence qui divise la fréquence du signal d'entrée par un nombre entier Nₛ, mais, comme cela a été expliqué précédemment, seulement dans le cas où Nₛ est supérieur à 1, c'est-à-dire dans le cas où la durée d'un symbole est de plusieurs (Nₛ) périodes (ou périodes moyennes) du signal radiofréquence RF.

Le coeur du démodulateur, après le diviseur DIV, comprend une ligne à retard qui n'a qu'une seule sortie Sₘ (ou dont une seule sortie est utilisée), et il comporte par ailleurs une seule bascule D dont l'entrée D reçoit la sortie Sₘ de la ligne à retard et dont l'entrée d'horloge CLK reçoit le signal d'entrée Hₛ à la fréquence F/Nₛ. Sur le front montant (par exemple) du signal Hₛ, la bascule prend l'état imposé sur son entrée D. Cet état dépend de l'instant d'arrivée sur l'entrée d'horloge CLK d'un deuxième front montant de Hₛ après un premier front montant qui a été retardé sur la sortie Sₘ.

Le retard sur la sortie Sₘ est de préférence d'une période moyenne Tₒ du signal Hₛ. Elle pourrait être d'une demi-période si on utilise les fronts descendants du signal Hₛ pour commander l'entrée d'horloge CLK de la bascule.

Pour un symbole de durée Tₒ+ΔT retardé de Tₒ (ou Tₒ/2) l'état de la bascule prend une première valeur binaire représentant ce symbole ; pour un symbole de durée Tₒ-ΔT il prend une valeur binaire inverse représentant ce symbole.

Si on veut simplifier au maximum le circuit, on utilise une ligne à retard fixe fournissant un retard égal à la période ou demi-période moyenne attendue To ou Tₒ/2. Sinon, on peut faire comme dans les réalisations décrites précédemment dans lesquelles on asservit le retard sur la fréquence moyenne du signal reçu en considérant que sur une constante de temps assez longue on reçoit autant de symboles de durée Tₒ+ΔT que de symboles de durée Tₒ-ΔT. Dans ce cas, on utilise un boucle à verrouillage de phase, représentée en pointillés sur la figure 11 et identique à celle qui a été décrite précédemment ; elle reçoit d'un côté le signal d'entrée Hₛ et de l'autre le signal sur la sortie Sₘ.

Etant donné qu'il n'y a qu'une seule ligne à retard et une seule bascule, il est souhaitable que l'écart entre les deux fréquences F₁ et F₂ représentant les deux symboles à démoduler soit suffisant pour que les fronts de montée ou descente du signal Hₛ, qui commandent l'entrée CLK de la bascule, ne soient pas trop proches des fronts de montée ou descente du signal retardé de T0, faute de quoi des erreurs pourraient se produire. Des valeurs telles que les périodes correspondant aux deux symboles soient respectivement Tₒ+ΔT et Tₒ-ΔT où ΔT est compris entre 15% et 35% de Tₒ conviennent bien. Le rapport F₂/F₁ entre les deux fréquences radio utilisées dans la modulation est alors compris entre 1,3 et 2 environ. La ligne à retard peut être réalisée à partir du schéma de la figure 7, dont une seule sortie correspondant à un retard Tₒ ou Tₒ/2 sera utilisée.

## Revendications

1. Démodulateur qui comprend une ligne à retard (DEL) apte à recevoir un signal d'entrée à une fréquence d'entrée (Hₛ) modulé en phase ou en fréquence par des symboles (SYₒ) de durée égale à une période du signal d'entrée ou très proche de cette période, la ligne à retard ayant N_{d} sorties produisant N_{d} signaux à la fréquence d'entrée (Hₛ) mais avec N_{d} retards différents, N_{d} étant un nombre entier supérieur ou égal à 1, le démodulateur comprenant en outre un registre (DFF) de N_{d} bascules recevant chacune une sortie respective de la ligne à retards et un signal d'horloge constitué par le signal d'entrée, les bascules étant agencées pour stocker l'état des sorties de la ligne à retard à la fin d'une période du signal d'entrée, le contenu du registre représentant une valeur d'un symbole de modulation du signal d'entrée.

2. Démodulateur selon la revendication 1, **caractérisé en ce que** la ligne à retard est une ligne à retards fixes.

3. Démodulateur selon la revendication 1, **caractérisé en ce que** la ligne à retard est une ligne à retard commandée par une boucle d'asservissement, la boucle d'asservissement comprenant :
- un comparateur de phase (CMPH) recevant d'une part le signal d'entrée et d'autre part une des sorties de la ligne à retard,
- et un intégrateur (PCH, Cᵢₙₜ) à constante de temps très supérieure à la durée des symboles, recevant la sortie du comparateur de phase et produisant un signal d'asservissement de la ligne à retard pour asservir les retards de cette ligne en fonction de la valeur moyenne de la fréquence d'entrée.

4. Démodulateur selon l'une des revendications 1 à 3, **caractérisé en ce que** le démodulateur comprend en outre, en amont de la ligne à retard, un diviseur de fréquence par un nombre entier Nₛ apte à recevoir un signal à une fréquence radio (RF) modulé en phase ou en fréquence et à fournir à l'entrée de la ligne à retard le signal d'entrée à la fréquence d'entrée (Hₛ) modulée Nₛ fois plus petite que la fréquence radio (RF).

5. Démodulateur selon l'une des revendications 1 à 4, **caractérisé en ce qu'**il comprend une ligne à retard auxiliaire (DELₐᵤₓ) placée en amont de la première ligne à retard, recevant le signal d'entrée à la fréquence d'entrée (Hₛ) et fournissant un signal retardé à la première ligne à retard.

6. Démodulateur selon la revendication 5, **caractérisé en ce que** la ligne à retard auxiliaire est commandée par une deuxième boucle d'asservissement, la deuxième boucle d'asservissement comprenant :
- un deuxième comparateur de phase recevant d'une part le signal d'entrée et d'autre part une sortie de la ligne à retard auxiliaire,
- et un intégrateur à constante de temps très supérieure à la durée des symboles, recevant la sortie du deuxième comparateur de phase et produisant un signal d'asservissement de la ligne à retard auxiliaire pour asservir les retards de cette ligne en fonction de la valeur moyenne de la fréquence d'entrée.

7. Démodulateur selon l'une des revendications 1 à 6, **caractérisé en ce que** N_{d} est supérieur à 1 et **en ce que** les N_{d} retards différents sont décalés de ΔT les uns par rapport aux autres.

8. Démodulateur selon l'une des revendications 1 à 6, **caractérisé en ce que** N_{d} = 1, et **en ce que** la ligne à retard fournit un signal retardé à une bascule unique ayant une entrée d'horloge recevant le signal d'entrée et ayant une sortie fournissant la valeur binaire des symboles de modulation pris parmi deux valeurs possibles.

9. Démodulateur selon la revendication 8, **caractérisé en ce que** le retard établi par la ligne à retard est d'une période ou une demi-période moyenne du signal d'entrée.

10. Système de transmission d'information entre un lecteur et une étiquette de radio-identification, **caractérisé en ce qu'**il comporte un démodulateur selon l'une des revendications 1 à 9, dans l'étiquette.

11. Système de transmission d'information selon la revendication 10, **caractérisé en ce que** le lecteur est apte à émettre un signal radiofréquence (RF) modulé en fréquence ou en phase.

12. Système de transmission d'information selon l'une des revendications 10 et 11, **caractérisé en ce que** le lecteur est apte à émettre des informations sous forme de symboles dont la durée est égale à un nombre entier Nₛ; supérieur ou égal à 1, de périodes successives du signal radiofréquence (RF) modulé.

13. Système de transmission d'information selon l'une des revendications 10 et 11, **caractérisé en ce que** le lecteur est apte à émettre des informations sous forme de symboles dont la durée est égale à un nombre entier Nₛ, supérieur ou égal à 1, de fois la période moyenne du signal radiofréquence.

## Claims

1. A demodulator which comprises a delay line (DEL) suitable for receiving an input signal at an input frequency (Hₛ), phase or frequency modulated by symbols (SYₒ) with a duration equal to a period of the input signal or very close to that period, the delay line having N_{d} outputs producing N_{d} signals at the input frequency (Hₛ) but with N_{d} different delays, N_{d} being an integer number greater than or equal to 1, the demodulator also comprising a register (DFF) of N_{d} latches each receiving a respective output of the delay line and a clock signal consisting of the input signal, in order to store the state of the outputs of the delay line at the end of a period of the input signal in the latch register, the content of the register representing a value of an input signal modulation symbol.

2. The demodulator as claimed in claim 1, **characterized in that** the delay line is a line with fixed delays.

3. The demodulator as claimed in claim 1, **characterized in that** the delay line is a line with delay controlled by a locked loop, the locked loop comprising:
- a phase comparator (CMPH) receiving on the one hand the input signal and on the other hand one of the outputs of the delay line, and
- an integrator (PCH, Cᵢₙₜ) with time constant very much greater than the duration of the symbols, receiving the output of the phase comparator and producing a delay line locking signal to lock the delays of this line according to the average value of the input frequency.

4. The demodulator as claimed in one of claims 1 to 3, **characterized in that** the demodulator also comprises, upstream of the delay line, a frequency divider dividing the frequency by an integer number Nₛ suitable for receiving a signal at a phase or frequency modulated radiofrequency (RF) and for supplying the input of the delay line with the input signal at the input frequency (Hₛ) modulated Nₛ times lower than the radiofrequency (RF).

5. The demodulator as claimed in one of claims 1 to 4, **characterized in that** it comprises an auxiliary delay line (DELₐᵤₓ) placed upstream of the first delay line, receiving the input signal at the input frequency (Hₛ) and supplying a delayed signal to the first delay line.

6. The demodulator as claimed in claim 5, **characterized in that** the auxiliary delay line is controlled by a second locked loop, the second locked loop comprising:
- a second phase comparator receiving on the one hand the input signal and on the other hand an output of the auxiliary delay line,
- and an integrator with time constant very much greater than the duration of the symbols, receiving the output of the second phase comparator and producing a locking signal for the auxiliary delay line in order to lock the delays of this line according to the average value of the input frequency.

7. The demodulator as claimed in one of claims 1 to 6, **characterized in that** N_{d} is greater than 1 and **in that** the N_{d} different delays are offset by ΔT relative to one another.

8. The demodulator as claimed in one of claims 1 to 6, **characterized in that** N_{d} = 1, and **in that** the delay line supplies a delayed signal to a single latch having a clock input receiving the input signal and having an output supplying the binary value of the modulation symbols taken from two possible values.

9. The demodulator as claimed in claim 8, **characterized in that** the delay established by the delay line is an average period or a half-period of the input signal.

10. A system for transmitting information between a reader and a radiofrequency identification tag, **characterized in that** it includes a demodulator as claimed in one of claims 1 to 9, in the tag.

11. The system for transmitting information as claimed in claim 10, **characterized in that** the reader is suitable for sending a frequency or phase modulated radiofrequency signal (RF).

12. The system for transmitting information as claimed in one of claims 10 and 11, **characterized in that** the reader is suitable for sending information in the form of symbols whose duration is equal to an integer number Nₛ, greater than or equal to 1, of successive periods of the modulated radiofrequency signal (RF).

13. The system for transmitting information as claimed in one of claims 10 and 11, **characterized in that** the reader is suitable for sending information in the form of symbols whose duration is equal to an integer number Nₛ, greater than or equal to 1, of times the average period of the radiofrequency signal.

## Patentansprüche

1. Demodulator, der eine Verzögerungsleitung (DEL) umfasst, die ein Eingangssignal mit einer Eingangsfrequenz (Hₛ) empfangen kann, das durch Symbole (SYₒ) mit einer Dauer von gleich oder sehr nahe an einer Periode des Eingangssignals phasen- oder frequenzmoduliert ist, wobei die Verzögerungsleitung N_{d} Ausgänge hat, die N_{d} Signale mit der Eingangsfrequenz (Hₛ), aber mit N_{d} verschiedenen Verzögerungen erzeugt, wobei N_{d} eine ganze Zahl gleich oder größer als 1 ist, wobei der Demodulator darüber hinaus ein Register (DFF) mit N_{d} Flipflops umfasst, die jeweils einen jeweiligen Ausgang der Verzögerungsleitung und ein von dem Eingangssignal gebildetes Taktsignal empfangen, wobei die Flipflops die Aufgabe haben, den Zustand der Ausgänge der Verzögerungsleitung am Ende einer Periode des Eingangssignals zu speichern, wobei der Inhalt des Registers einen Wert eines Modulationssymbols des Eingangssignals repräsentiert.

2. Demodulator nach Anspruch 1, **dadurch gekennzeichnet, dass** die Verzögerungsleitung eine Leitung mit festen Verzögerungen ist.

3. Demodulator nach Anspruch 1, **dadurch gekennzeichnet, dass** die Verzögerungsleitung eine Verzögerungsleitung ist, die durch einen Regelkreis gesteuert wird, wobei der Regelkreis Folgendes umfasst:
- einen Phasenkomparator (CMPH), der einerseits das Eingangssignal und andererseits einen der Ausgänge der Verzögerungsleitung empfängt,
- und einen Integrator (PCH, Cᵢₙₜ) mit einer Zeitkonstante, die weitaus höher ist als die Dauer der Symbole, der den Ausgang des Phasenkomparators empfängt und ein Regelsignal der Verzögerungsleitung zum Regeln der Verzögerungen dieser Leitung in Abhängigkeit vom Mittelwert der Eingangsfrequenz erzeugt.

4. Demodulator nach einem der Ansprüche 1 bis 3, **dadurch gekennzeichnet, dass** der Demodulator darüber hinaus oberhalb der Verzögerungsleitung einen Frequenzteiler durch eine ganze Zahl Nₛ umfasst, der ein Signal mit einer phasen- oder frequenzmodulierten Funkfrequenz (RF) empfangen und das Eingangssignal mit der Eingangsfrequenz (Hₛ) an den Eingang der Verzögerungsleitung anlegen kann, die Nₛ mal kleiner ist als die Funkfrequenz (RF).

5. Demodulator nach einem der Ansprüche 1 bis 4, **dadurch gekennzeichnet, dass** er wenigstens eine Zusatzverzögerungsleitung (DELₐᵤₓ) umfasst, die sich oberhalb der ersten Verzögerungsleitung befindet und das Eingangssignal mit der Eingangsfrequenz (Hₛ) empfängt und ein verzögertes Signal an die erste Verzögerungsleitung anlegt.

6. Demodulator nach Anspruch 5, **dadurch gekennzeichnet, dass** die Zusatzverzögerungsleitung durch einen zweiten Regelkreis gesteuert wird, wobei der zweite Regelkreis Folgendes umfasst:
- einen zweiten Phasenkomparator, der einerseits das Eingangssignal und andererseits einen Ausgang der Zusatzverzögerungsleitung empfängt, und
- einen Integrator mit einer Zeitkonstante, die weitaus höher ist als die Dauer der Symbole, der den Ausgang des zweiten Phasenkomparators empfängt und ein Regelsignal der Zusatzverzögerungsleitung zum Regeln der Verzögerungen dieser Leitung in Abhängigkeit vom Mittelwert der Eingangsfrequenz erzeugt.

7. Demodulator nach einem der Ansprüche 1 bis 6, **dadurch gekennzeichnet, dass** N_{d} größer als 1 ist, und dadurch, dass die N_{d} verschiedenen Verzögerungen um ΔT relativ zueinander versetzt sind.

8. Demodulator nach einem der Ansprüche 1 bis 6, **dadurch gekennzeichnet, dass** N_{d} = 1, und dadurch, dass die Verzögerungsleitung ein verzögertes Signal an einen einzigen Flipflop anlegt, der einen das Eingangssignal empfangenden Takteingang und einen Ausgang hat, der den von zwei möglichen Werten genommenen Binärwert der Modulationssymbole anlegt.

9. Demodulator nach Anspruch 8, **dadurch gekennzeichnet, dass** die durch die Verzögerungsleitung etablierte Verzögerung von einer Periode oder einer mittleren Halbperiode des Eingangssignals ist.

10. System zum Übertragen von Informationen zwischen einem Leser und einem Funkidentifikationsetikett, **dadurch gekennzeichnet, dass** es einen Demodulator nach einem der Ansprüche 1 bis 9 in dem Etikett umfasst.

11. System zum Übertragen von Informationen nach Anspruch 10, **dadurch gekennzeichnet, dass** der Leser ein frequenz- oder phasenmoduliertes Funkfrequenzsignal (RF) aussenden kann.

12. System zum Übertragen von Informationen nach einem der Ansprüche 10 und 11, **dadurch gekennzeichnet, dass** der Leser Informationen in Form von Symbolen aussenden kann, deren Dauer gleich einer ganzen Zahl Nₛ, die gleich oder größer als 1 ist, von aufeinander folgenden Perioden des modulierten Funkfrequenzsignals (RF) ist.

13. System zum Übertragen von Informationen nach einem der Ansprüche 10 und 11, **dadurch gekennzeichnet, dass** der Leser Informationen in Form von Symbolen aussenden kann, deren Dauer gleich einem Vielfachen von einer ganzen Zahl Nₛ, die gleich oder größer als 1 ist, der mittleren Periode des Funkfrequenzsignals ist.
